# EUROPEAN PATENT SPECIFICATION

(11) **EP 4 014 706 B1**
(45) Date of publication and mention of the grant of the patent: **07.08.2024**
(21) Application number: 21207412.4
(22) Date of filing: 10.11.2021
(51) Int. Cl.: A01B 69/04, G05D 1/00

(54) **WORK VEHICLE**
NUTZFAHRZEUG
ENGIN DE CHANTIER

(30) Priority: 17.12.2020 JP 2020209657
(43) Date of publication of application: 22.06.2022
(73) Proprietor: Iseki & Co., Ltd., Matsuyama-shi, Ehime 799-2692 (JP)
(72) Inventor: KAJINO, Yutaka, Iyo-gun, 791-2193 (JP); FUJIIE, Hisasada, Iyo-gun, 791-2193 (JP); YAMASHITA, Tomoshi, Iyo-gun, 791-2193 (JP); TANAKA, Seiji, Iyo-gun, 791-2193 (JP)
(74) Representative: TBK

(56) References cited:
- EP-A1- 3 351 078
- DE-A1- 102020 108 791
- JP-A- 2019 133 701
- JP-A- 2019 187 358
- JP-A- 2020 166 881
- US-B2- 10 324 461

## Description

### BACKGROUND OF THE INVENTION

### FIELD OF THE INVENTION

The present invention relates to a work vehicle.

### DESCRIPTION OF THE RELATED ART

In the related art, a work vehicle performing work in a field autonomously travels while measuring the position of a traveling vehicle body. As to such work vehicles, a technique is known with which the shape of a field is specified by travel trajectory recording during manned traveling along the end of the field, a headland region is set in accordance with the specified field shape, a path (work path) for unmanned traveling inside the set headland region is set, and the terminal end of the set work path is set as a work end position (see, for example, JP 2019 133701 A).

In the related art as described above, the work end position is inside the end of the field by the headland region. Accordingly, in order to board the work vehicle again with the work vehicle at the work end position, that is, after the end of the unmanned traveling of the work vehicle, a worker is required to move into the field by the headland region and walk in the field to the stopped work vehicle, which is inconvenient.

Furthermore, document DE 10 2020 108791 A1 discloses a travel area shape registration system which registers a shape of a travel area where a work vehicle travels. In particular, the shape of a field is specified by travel trajectory recording during manned traveling along the end of the field, a headland region is set in accordance with the specified field shape, a work path for unmanned traveling inside the set headland region is set, and the terminal end of the set work path is set as a work end position. Further prior art showing technological background in the field of the invention is known from US 10 324 461 B2, JP 2019 187358 A, JP 2020 166881 A and EP 3 351 078 A1

### SUMMARY OF THE INVENTION

The invention has been made in view of the above, and an object of the invention is to provide a work vehicle allowing a worker to board the work vehicle with little field entry before the start and/or after the end of the autonomous traveling of a traveling vehicle body.

In order to solve the above problems and achieve the object, a work vehicle (1) according to an embodiment includes: a traveling vehicle body having traveling devices and a steering device and capable of traveling in a field; a control device controlling the traveling devices and the steering device such that the traveling vehicle body autonomously travels along a preset travel path; and a remote operation device outputting a traveling signal with respect to the traveling vehicle body to the control device so that the traveling vehicle body is remotely operated, in which the remote operation device has at least four push buttons and the traveling vehicle body is remotely operable by two out of the four push buttons being pressed at the same time before start and/or after end of the autonomous traveling of the traveling vehicle body, and the control device executes forward and reverse movements of the traveling vehicle body by the traveling devices and right and left steering of the steering device in accordance with the combination of the two push buttons pressed at the same time in the remote operation device.

According to the work vehicle according to the embodiment, a worker can board the work vehicle with little field entry before the start and/or after the end of the autonomous traveling of the traveling vehicle body.

### BRIEF DESCRIPTION OF THE DRAWINGS

Fig. 1 is a schematic left side view illustrating a work vehicle according to an embodiment;
Fig. 2 is a block diagram illustrating an example of a control system for the work vehicle according to the embodiment;
Fig. 3 is an explanatory view of autonomous traveling in a field;
Fig. 4 is a front view illustrating a remote operation device;
Fig. 5A is an explanatory view of a push button pressed during a forward operation of a machine body;
Fig. 5B is an explanatory view of a push button pressed during a reverse operation of the machine body;
Fig. 5C is an explanatory view of a push button pressed during a left turn operation of the machine body;
Fig. 5D is an explanatory view of a push button pressed during a right turn operation of the machine body;
Fig. 6A is a front view illustrating a remote operation device according to a first modification example;
Fig. 6B is a front view illustrating a remote operation device according to a second modification example;
Fig. 6C is a front view illustrating a remote operation device according to a third modification example; and
Fig. 7 is a front view illustrating a remote operation device according to a fourth modification example.

### DETAILED DESCRIPTION OF THE INVENTION

Hereinafter, an embodiment of a work vehicle disclosed in the present application will be described in detail with reference to the accompanying drawings. It should be noted that the invention is not limited to the following embodiment.

### <Overall Configuration of Work Vehicle (Tractor)>

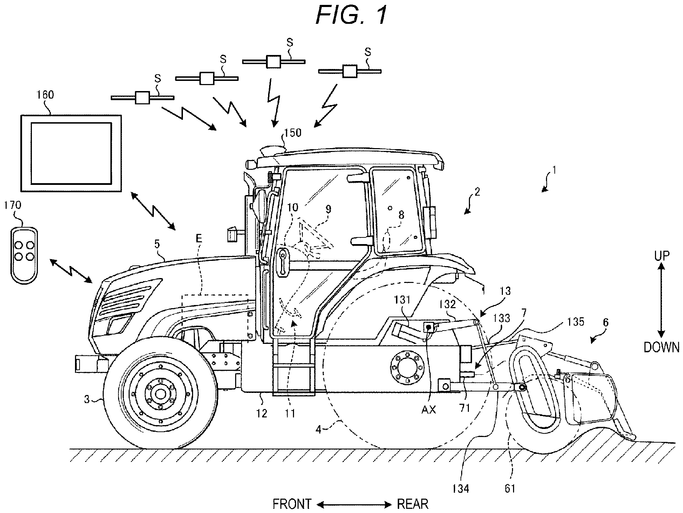

First, an overall configuration of a work vehicle 1 according to the embodiment will be described with reference to Fig. 1. Fig. 1 is a schematic left side view illustrating the work vehicle 1 according to the embodiment. It should be noted that a tractor will be described below as an example of the work vehicle 1. In addition, the tractor (work vehicle) 1 is a self-propelled agricultural tractor performing farm work in a field.

In addition, the tractor (work vehicle) 1 executes predetermined work while traveling in the field with an operator (also referred to as a worker) aboard and executes predetermined work while autonomously traveling in the field by each unit being controlled by a control system, the center of which is a control device 100.

It should be noted that the front-rear direction in the description using Fig. 1 is the traveling direction of the tractor 1 that travels straight. The front side in the traveling direction is defined as "front", and the rear side in the traveling direction is defined as "rear". The traveling direction of the tractor 1 is the direction from a cockpit 8 (described later) to a steering wheel 9 when the tractor 1 travels straight.

In addition, the left-right direction is horizontally orthogonal to the front-rear direction. In the following description, the left and the right are defined toward the "front" side. In other words, the left-hand side is "left" and the right-hand side is "right" in a state where the operator is seated in the cockpit 8 and faces forward. The up-down direction is the vertical direction. The front-rear direction, the left-right direction, and the up-down direction are orthogonal mutually and three-dimensionally. Further, the tractor 1 or a traveling vehicle body 2 may be referred to as "machine body".

As illustrated in Fig. 1, the tractor 1 includes the traveling vehicle body 2 and a work machine 6. The traveling vehicle body 2 is capable of traveling in the field and includes a pair of right and left front wheels 3 and a pair of right and left rear wheels 4 as traveling devices. The front wheels 3 are vehicle wheels for steering. The rear wheels 4 are vehicle wheels for driving (drive wheels). It should be noted that the traveling vehicle body 2 may include a crawler device as a traveling device instead of the vehicle wheels (front wheels 3 and rear wheels 4). In this case, the traveling crawler is the drive wheel.

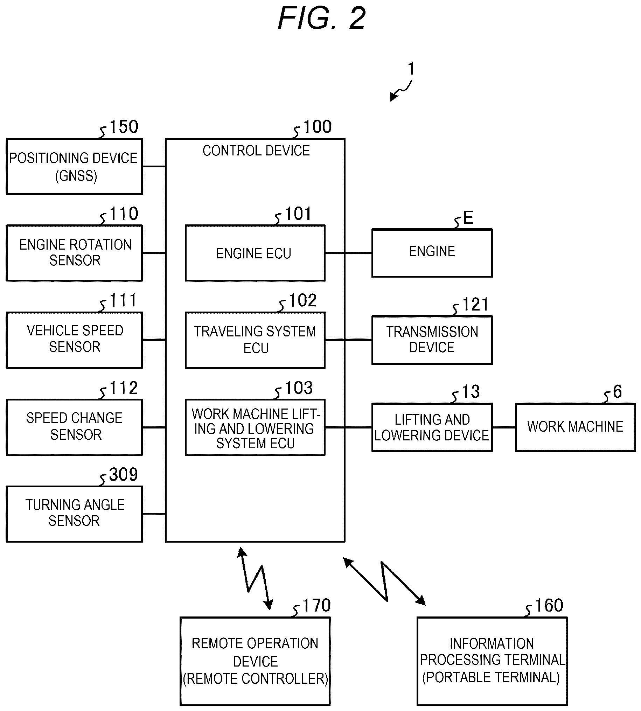

An engine E accommodated in a bonnet 5 as a drive source generates rotational power, and the rotational power is transmitted to the rear wheels 4 (drive wheels) after being appropriately decelerated by a transmission device (transmission) 121 (see Fig. 2). The transmission device 121 is provided in a power transmission device (transmission case) 12, which is a traveling device. The rear wheels 4 are driven by the rotational power transmitted from the engine E. The transmission device 121 switches the rotational power transmitted from the engine E to any one of a plurality of gears (e.g. first to eighth).

The traveling vehicle body 2 is configured to be capable of transmitting the power generated by the engine E and decelerated by the transmission device 121 also to the front wheels 3 via a 4WD clutch. When the 4WD clutch transmits the power in this case, the four wheels (front wheels 3 and rear wheels 4) are driven by the power transmitted from the engine E. In addition, when the 4WD clutch cuts off the transmission of the power, only the rear wheels 4 (i.e. only two wheels) are driven by the power transmitted from the engine E. In this manner, the traveling vehicle body 2 is configured to be switchable between two-wheel drive (2WD) and four-wheel drive (4WD).

Provided in the rear portion of the traveling vehicle body 2 is a power take-off (PTO) device 7 having a PTO shaft 71 to which the work machine 6 performing work in the field is connected. The PTO shaft 71 transmits power to drive the work machine 6. The cockpit 8 is provided in the middle portion of the traveling vehicle body 2. The operator sits in the cockpit 8 in a case where he or she operates the tractor 1.

Provided in the front of the cockpit 8 is the steering wheel 9, which is a steering device and handle for steering the front wheels 3. It should be noted that the steering wheel 9, the drive unit driving the steering wheel, and so on configure a steering device. The steering wheel 9 is provided in the upper end portion of a handle post 10. Various operation pedals 11 (such as accelerator, brake, and clutch pedals) are provided below the handle post 10 and near the feet of the operator seated in the cockpit 8.

In addition, a lifting and lowering device 13 lifting and lowering the work machine 6 is provided in the rear portion of the traveling vehicle body 2. The lifting and lowering device 13 moves the work machine 6 to a non-working position by lifting the work machine 6. In addition, the lifting and lowering device 13 moves the work machine 6 to a ground work position by lowering the work machine 6. The lifting and lowering device 13 includes a hydraulic lifting and lowering cylinder 131, a lift arm 132, a lift rod 133, a lower link 134, and a top link 135.

When hydraulic oil is supplied to the lifting and lowering cylinder 131, the lift arm 132 pivots around an axis AX so as to lift the work machine 6. When the hydraulic oil is discharged from the lifting and lowering cylinder 131, the lift arm 132 pivots around the axis AX so as to lower the work machine 6. It should be noted that a lift arm sensor detecting the pivot angle of the lift arm 132 is provided in the base portion of the lift arm 132 (near the axis AX). The height of the work machine 6 is calculated based on the value detected by the lift arm sensor.

In addition, the lift arm 132 is connected to the lower link 134 via the lift rod 133. In this manner, the lifting and lowering device 13 connects the work machine 6 to the traveling vehicle body 2 with the lower link 134 and the top link 135 such that lifting and lowering are possible.

It should be noted that Fig. 1 exemplifies a case where the work machine 6 is a rotary tiller. The rotary tiller performs field scene (soil) plowing by a tillage claw 61 being rotated by the power transmitted from the PTO shaft 71 of the PTO device 7.

The tractor 1 includes the control device 100 (see Fig. 2). The control device 100 controls the engine E and the traveling speed of the traveling vehicle body 2. In addition, the control device 100 controls the work machine 6.

In addition, the tractor 1 includes a positioning device 150. The positioning device 150 is provided in the upper portion of the traveling vehicle body 2 and measures the position of the traveling vehicle body 2. The positioning device 150 is, for example, a global navigation satellite system (GNSS) and is capable of performing positioning and timekeeping by receiving radio waves from an orbiting navigation satellite S in the sky.

In addition, the tractor 1 is capable of setting various types of work in a specific field by the worker operating an information processing terminal (portable terminal such as a tablet terminal) 160. The information processing terminal 160 can be connected to a communication network such as the Internet and can be connected to a work management device via the communication network. In this case, the work management device is a system capable of so-called cloud computing. The information processing terminal 160 and the work management device are connected by, for example, a wireless local area network (LAN).

The information processing terminal 160 includes, for example, a storage unit configured by a hard disk, a read-only memory (ROM), a random-access memory (RAM), and so on and display and operation units configured by a touch panel. It should be noted that various keys, buttons, and so on may be separately provided as the operation unit. The work management device is, for example, a computer provided with a processing device having a central processing unit (CPU) or the like, a storage device such as a read-only memory (ROM), a random-access memory (RAM), and a hard disk drive (HDD), and an input-output device.

In addition, the tractor 1 includes a remote operation device (hereinafter, referred to as a remote controller) 170. The remote controller 170 is used in a case where the worker remotely operates the traveling vehicle body 2. The remote controller 170 outputs a traveling-related traveling signal such as forward movement, reverse movement, left turn, right turn, and stop with respect to the traveling vehicle body 2 to the control device 100 so that the traveling vehicle body 2 is remotely operated.

It should be noted that the control device 100 is configured to be capable of communicating with the remote controller 170 at all times. The control device 100 controls each unit so as to stop the tractor 1 in a case where, for example, the interruption of communication with the remote controller 170 is determined. Then, the autonomous traveling of the tractor 1 (traveling vehicle body 2) that cannot be remotely operated by the remote controller 170 can be stopped.

### <Work Vehicle (Tractor) Control System>

Next, the control system for the work vehicle (tractor) 1, the center of which is the control device 100, will be described with reference to Fig. 2. Fig. 2 is a block diagram illustrating an example of the control system for the work vehicle (tractor) 1 according to the embodiment. As illustrated in Fig. 2, the control device 100 includes an engine electronic control unit (ECU) 101, a traveling system ECU 102, and a work machine lifting and lowering system ECU 103.

The engine ECU 101 controls the rotation speed of the engine E. The traveling system ECU 102 controls the traveling speed of the traveling vehicle body 2 (see Fig. 1) by controlling the rotation of the drive wheels (rear wheels 4). The work machine lifting and lowering system ECU 103 drives the work machine 6 to be lifted and lowered by controlling the lifting and lowering device 13.

The control device 100 is capable of controlling each unit by electronic control. The control device 100 includes, for example, a processing unit having a central processing unit (CPU) or the like and a storage unit storing necessary data such as a planned travel path R (described later) of the traveling vehicle body 2 preset for each program and field.

As illustrated in Fig. 2, various sensors such as the positioning device (GNSS) 150, an engine rotation sensor 110, a vehicle speed sensor 111, a speed change sensor 112, and a turning angle sensor 309 are connected to the control device 100. The engine rotation sensor 110 detects the rotation speed of the engine E. The vehicle speed sensor 111 detects the traveling speed (vehicle speed) of the traveling vehicle body 2 (see Fig. 1). The speed change sensor 112 detects which one of the plurality of gears is the current gear in the transmission device 121. The turning angle sensor 309 detects the turning angle of the front wheel 3 (see Fig. 1) as described above.

Position information on the traveling vehicle body 2 in the field or the like is input from the positioning device 150 to the control device 100. The rotation speed of the engine E is input from the engine rotation sensor 110 to the control device 100. The traveling speed of the traveling vehicle body 2 is input from the vehicle speed sensor 111 to the control device 100. The current gear is input from the speed change sensor 112 to the control device 100. The turning angle of the front wheel 3 is input from the turning angle sensor 309 to the control device 100. It should be noted that the control device 100 in a case where the tractor 1 is allowed to perform autonomous traveling steers the steering wheel 9 by controlling the steering cylinder connected to the steering wheel 9 while feeding back the turning angle of the front wheel 3 using the value detected by the turning angle sensor 309 as described above.

In the control device 100, the engine ECU 101 is connected to the engine E, the traveling system ECU 102 is connected to the transmission device 121, and the work machine lifting and lowering system ECU 103 is connected to the lifting and lowering device 13. The engine ECU 101 outputs a rotation control signal toward the engine E. The traveling system ECU 102 outputs a gear switch control signal toward the transmission device 121. The work machine lifting and lowering system ECU 103 outputs a work machine lifting and lowering signal toward the lifting and lowering device 13. In addition, the lifting and lowering device 13 lifts and lowers the work machine 6 based on the work machine lifting and lowering signal output from the work machine lifting and lowering system ECU 103.

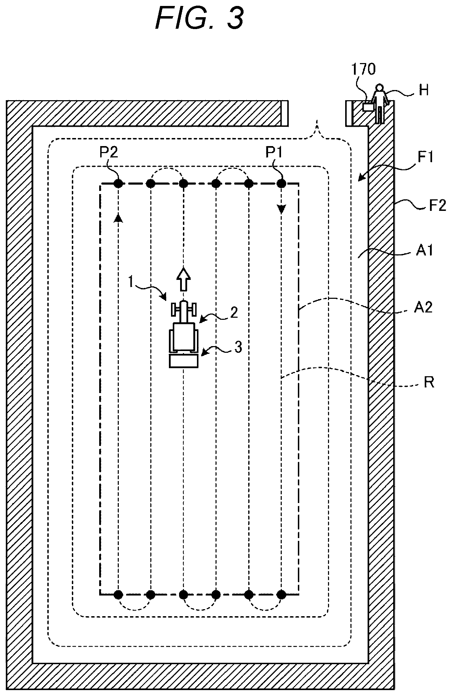

In addition, in the control device 100 in a case where the tractor 1 is allowed to perform autonomous traveling, the planned travel path R (see Fig. 3) corresponding to the content of the work of the work machine 6 is determined in advance for each field, converted into data, and stored in the storage unit. The control device 100 controls the engine E, the transmission device 121, the lifting and lowering device 13, and so on based on the measurement result of the positioning device 150 such that traveling is performed along the stored planned travel path R. The planned travel path R is set in accordance with, for example, the shape and size of the field, the width, length, and number of ridges formed in the field, and crop types. It should be noted that the planned travel path R will be described later with reference to Fig. 3.

In addition, as described above, the control device 100 is wirelessly connected to, for example, the information processing terminal (portable terminal) 160, which can be carried by the worker using the tractor 1. The control device 100 controls each unit of the tractor 1 based on an instruction signal from the information processing terminal 160 resulting from operation performed by the worker. It should be noted that the control device 100 may be configured to hold a machine body information database for the tractor 1 such that exchange of information such as model can be performed from the portable terminal 160 or the like as well.

In addition, as described above, the control device 100 is wirelessly connected to the remote controller 170, which can be carried by the worker using the tractor 1. The control device 100 controls the traveling and steering devices based on an instruction signal (traveling signal) from the remote controller 170 resulting from operation performed by the worker.

### <Autonomous Traveling in Field>

Next, the autonomous traveling of the work vehicle (tractor) 1 in a field F1 will be described with reference to Fig. 3. Fig. 3 is an explanatory view of the autonomous traveling in a field F. In the case of tillage work by the tractor 1 that performs work while traveling autonomously, for example, the derivation unit of the control device 100 (see Fig. 2) derives information for generating the travel path (planned travel path) R, in which an appropriate turning position, a plowing depth, and so on are defined, based on, for example, information including the total length, total width, and tread of the tractor 1 (traveling vehicle body 2 and work machine 6), the capacity of the work machine 6 (rotary tiller or the like), the shape and area of the field F1, and so on.

As illustrated in Fig. 3, the tractor 1 enters the field F1 from the entrance and exit of the field F1 along the planned travel path R and automatically performs tillage work while appropriately turning and traveling. It should be noted that the tractor 1, depending on the program, can also be controlled to go out of the field F1 from the entrance and exit of the field F1 and stop at a predetermined place after the tillage work.

The tractor 1 (traveling vehicle body 2) performs, for example, ground work while circling in a headland region A1 as a predetermined region inside a ridge F2, that is, inside from the end of the field F1. The tractor 1 performs the ground (tillage) work in a region A2 inside the headland region A1 while repeating straight traveling and turning from a preset work start position P1 to a work end position P2.

Here, the work end position P2 is inside the end of the field F1 by the headland region A1. Accordingly, in order to board the tractor 1 again with the tractor 1 at the work end position P2 (after the work is completed), a worker H needs to move into the field F1 by at least the headland region A1, which is inconvenient. According to the present embodiment, such inconvenience can be eliminated using the remote controller 170.

### <Operation Surface of Remote Controller>

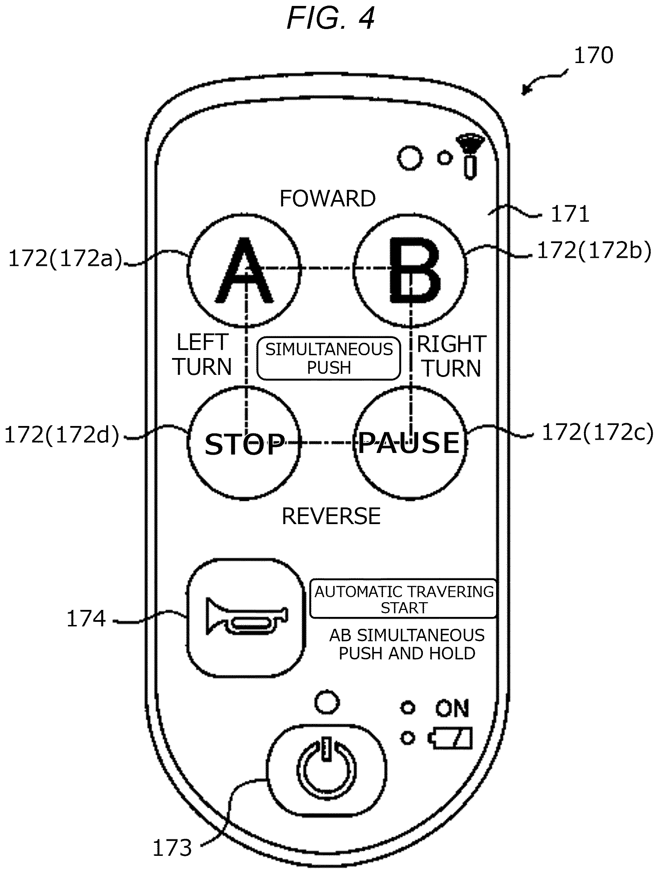

Next, an operation surface 171 of the remote controller 170 will be described with reference to Fig. 4. Fig. 4 is a front view illustrating the remote operation device (remote controller) 170. As illustrated in Fig. 4, the remote controller 170 has the operation surface 171 operated by a worker in the front surface portion of the main body of the remote controller 170. A plurality of push button-type operation buttons 172 are arranged in, for example, the upper half region of the operation surface 171. At least four operation buttons 172 (first operation button 172a to fourth operation button 172d) are arranged on the operation surface 171. In addition, a push button-type power button 173 and a push button-type horn button 174 are further arranged in, for example, the lower half region of the operation surface 171.

The first operation button 172a and the second operation button 172b are pressed in a case where the tractor 1 (see Fig. 1) is allowed to travel. The third operation button 172c is pressed in a case where the tractor 1 is paused. The fourth operation button 172d is pressed in a case where the tractor 1 (engine E) is stopped.

In addition, the first operation button 172a to the fourth operation button 172d are disposed at the positions of the four vertices of a rectangle as indicated by the two-dot dashed line in the drawing. Specifically, the first operation button 172a and the second operation button 172b are disposed at the positions of the two vertices forming the upper side of the rectangle, the third operation button 172c and the fourth operation button 172d are disposed at the positions of the two vertices forming the lower side of the rectangle, the first operation button 172a and the fourth operation button 172d are disposed at the positions of the two vertices forming the left side of the rectangle, and the second operation button 172b and the third operation button 172c are disposed at the positions of the two vertices forming the right side of the rectangle.

The power button 173 is pressed in a case where the remote controller 170 is turned on. The horn button 174 is pressed in a case where a warning sound is generated by the tractor 1. By having the horn button 174, a worker monitoring the tractor 1 from a ridge presses the horn button 174 in a case where, for example, he or she finds a bird or the like in front of the tractor 1, and then the bird or the like can be driven away by the warning sound being generated. As a result, a decline in work efficiency attributable to recognizing a bird as an obstacle and automatically stopping each time a bird is detected during the work of the tractor 1 can be suppressed.

In addition, the remote controller 170 is capable of remotely operating the tractor 1 by two (e.g. first operation button 172a and second operation button 172b) out of the four operation buttons 172 (first operation button 172a to fourth operation button 172d) being pressed at the same time before the start and/or after the end of the autonomous traveling of the tractor 1. In this case, a worker is required to press the two operation buttons 172 at the same time, and thus misoperation is suppressed as compared with a case where operation is performed by one operation button 172 being pressed.

Then, the control device 100 (see Fig. 2) executes the traveling device-based forward and reverse movements of the tractor 1 (traveling vehicle body 2) and the right and left steering of the steering device in accordance with the combination of the two operation buttons 172 pressed at the same time on the remote controller 170.

In addition, on the operation surface 171 of the remote controller 170, "forward", "reverse", "left turn", and "right turn" are marked such that a worker can easily recognize the marks and can easily recognize the operation of the tractor 1 from the position of the operation button 172 that is pressed. Such marks may be letter-based marks or, for example, combinations of the design of the tractor 1 and an arrow indicating the traveling direction of the tractor 1. In addition, the right and left turn marks may be combinations of the design of the steering wheel 9 and an arrow indicating the direction in which the steering wheel 9 is turned.

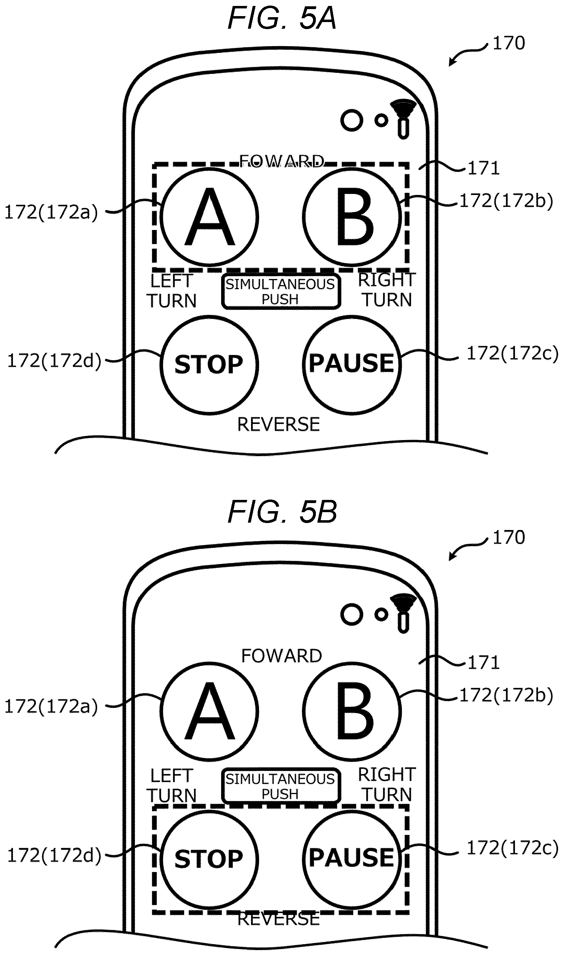

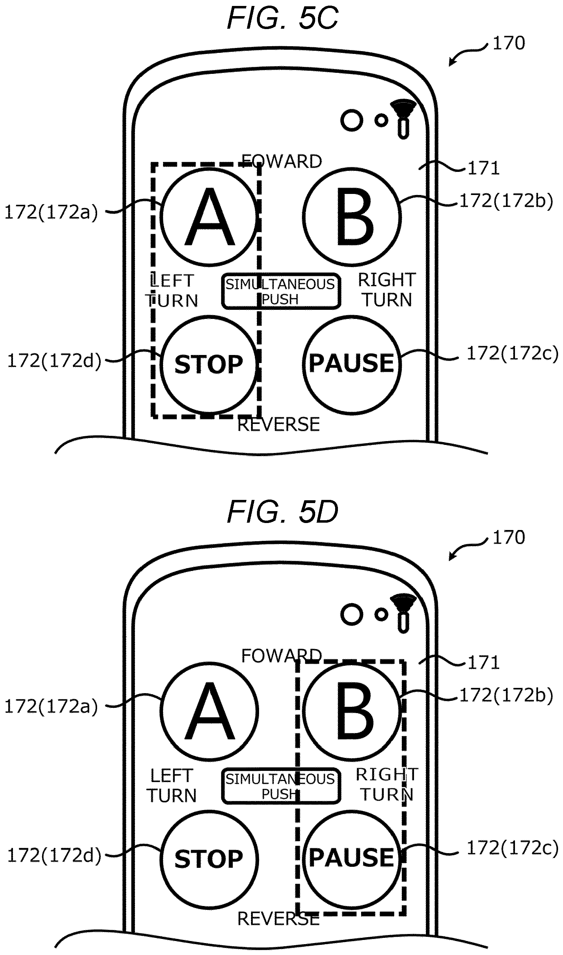

Figs. 5A to 5D illustrate the combinations of the push buttons (first operation button 172a to fourth operation button 172d) pressed during the operation by the remote controller 170. Fig. 5A is an explanatory view of the push buttons (operation buttons) 172 pressed during the forward operation of the machine body. Fig. 5B is an explanatory view of the push buttons (operation buttons) 172 pressed during the reverse operation of the machine body. Fig. 5C is an explanatory view of the push buttons (operation buttons) 172 pressed during the left turn operation of the machine body. Fig. 5D is an explanatory view of the push buttons (operation buttons) 172 pressed during the right turn operation of the machine body.

As illustrated in Fig. 5A, the control device 100 (see Fig. 2) executes the forward movement of the tractor 1 when the first operation button 172a and the second operation button 172b are pressed at the same time. As illustrated in Fig. 5B, the control device 100 executes the reverse movement of the tractor 1 when the third operation button 172c and the fourth operation button 172d are pressed at the same time.

As illustrated in Fig. 5C, the control device 100 executes the left steering of the steering device, that is, the left turn of the tractor 1 when the first operation button 172a and the fourth operation button 172d are pressed at the same time. As illustrated in Fig. 5D, the control device 100 executes the right steering of the steering device, that is, the right turn of the tractor 1 when the second operation button 172b and the third operation button 172c are pressed at the same time.

In addition, the control device 100 executes the forward movement, reverse movement, left turn, and right turn of the tractor 1 in accordance with the combination of the two operation buttons 172 only while the two operation buttons 172 are pressed at the same time.

As described above, according to the tractor 1 according to the embodiment, the traveling vehicle body 2 is remotely operated by two out of the four operation buttons 172 (first operation button 172a to fourth operation button 172d) of the remote controller 170 being pressed at the same time in a predetermined combination. Accordingly, it is possible to remotely operate the traveling vehicle body 2 while suppressing misoperation before the start and/or after the end of the autonomous traveling of the traveling vehicle body 2. Accordingly, when the traveling vehicle body 2 is moved to a ridge by remote operation before the start and/or after the end of the autonomous traveling of the traveling vehicle body 2, for example, the worker H can board the traveling vehicle body 2 (tractor 1) with little field entry, which is convenient, and workability is improved. It is more difficult to walk in the field F1 in puddling work in particular, and thus the workability is considerably improved when the worker H can board the tractor 1 with little field entry.

In addition, an existing remote controller can be used for the remote controller 170 and a function can be added without an increase in cost.

In addition, the four operation buttons 172 on the remote controller 170 are disposed such that the positions of the two operation buttons 172 pressed at the same time and the movement of the traveling vehicle body 2 (e.g. forward movement, reverse movement, left turn, and right turn) by remote operation of the remote controller 170 match substantially. In other words, the combination of the two operation buttons 172 pressed at the same time is a combination of positions where the worker H can easily image the movement of the traveling vehicle body 2, and thus misoperation can be suppressed more reliably.

In addition, the traveling vehicle body 2 moves only while the two operation buttons 172 are pressed at the same time on the remote controller 170, and thus misoperation can be suppressed more reliably.

It should be noted that the four operation buttons 172 (first operation button 172a to fourth operation button 172d) are arranged on the operation surface 171 of the remote controller 170 in the embodiment described above and yet the invention is not limited thereto and five or more operation buttons 172 may be arranged. Even in a case where five or more operation buttons 172 are arranged, the forward movement, reverse movement, left turn, and right turn of the tractor 1 are executed in accordance with the combination of the operation buttons 172 pressed at the same time.

### <Modification Examples of Remote Controller>

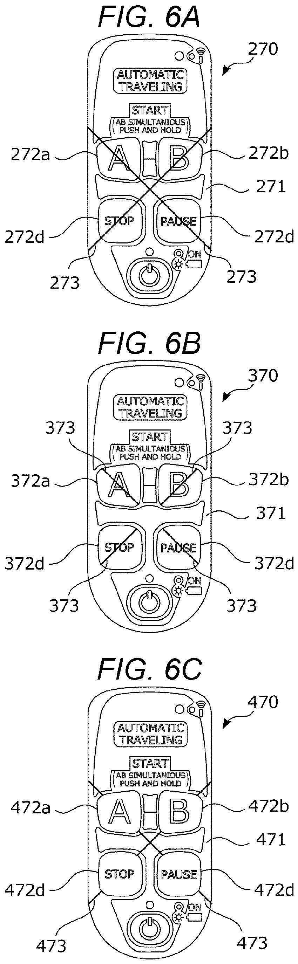

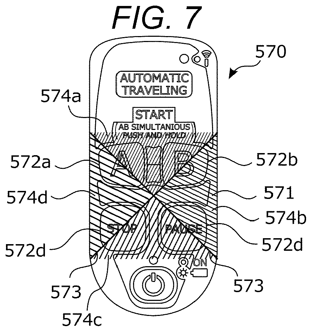

Next, modification examples of the remote controller 170 described above will be described with reference to Figs. 6A to 6C and Fig. 7. Figs. 6A to 6C are front views illustrating remote operation devices (remote controllers) 270, 370, and 470 according to first to third modification examples. In addition, Fig. 7 is a front view illustrating a remote operation device (remote controller) 570 according to a fourth modification example.

As illustrated in Fig. 6A, four push button-type operation buttons 272a to 272d are arranged on an operation surface 271 of the remote controller 270. The operation button 272a and the operation button 272b are pressed in a case where the tractor 1 (see Fig. 1) is allowed to travel. The operation button 272c is pressed in a case where the tractor 1 is paused. The operation button 272d is pressed in a case where the tractor 1 (engine) is stopped.

In addition, also in the remote controller 270, the four operation buttons 272a to 272d are disposed at the positions of the four vertices of a rectangle. The remote controller 270 is capable of remotely operating the tractor 1 by two (e.g. operation button 272a and operation button 272b) out of the four operation buttons 272a to 272d being pressed at the same time before the start and/or after the end of the autonomous traveling of the tractor 1.

In addition, an X-shaped mark line 273 as a mark for a worker is provided on the operation surface 271 of the remote controller 270. With the mark line 273, it is possible to remotely operate the tractor 1 while suppressing misoperation before the start and/or after the end of the autonomous traveling of the tractor 1.

In addition, as illustrated in Fig. 6B, four push button-type operation buttons 372a to 372d are arranged on an operation surface 371 of the remote controller 370. The operation button 372a and the operation button 372b are pressed in a case where the tractor 1 is allowed to travel. The operation button 372c is pressed in a case where the tractor 1 is paused. The operation button 372d is pressed in a case where the tractor 1 (engine) is stopped.

In addition, also in the remote controller 370, the four operation buttons 372a to 372d are disposed at the positions of the four vertices of a rectangle. The remote controller 370 is capable of remotely operating the tractor 1 by two (e.g. operation button 372a and operation button 372b) out of the four operation buttons 372a to 372d being pressed at the same time before the start and/or after the end of the autonomous traveling of the tractor 1.

In addition, on the four operation buttons 372a to 372d of the remote controller 370, a mark line 373 as a mark for a worker is provided so as to have an X shape as a whole. With the mark line 373, it is possible to remotely operate the tractor 1 while suppressing misoperation before the start and/or after the end of the autonomous traveling of the tractor 1.

In addition, as illustrated in Fig. 6C, four push button-type operation buttons 472a to 472d are arranged on an operation surface 471 of the remote controller 470. The operation button 472a and the operation button 472b are pressed in a case where the tractor 1 is allowed to travel. The operation button 472c is pressed in a case where the tractor 1 is paused. The operation button 472d is pressed in a case where the tractor 1 (engine) is stopped.

In addition, also in the remote controller 470, the four operation buttons 472a to 472d are disposed at the positions of the four vertices of a rectangle. The remote controller 470 is capable of remotely operating the tractor 1 by two (e.g. operation button 472a and operation button 472b) out of the four operation buttons 472a to 472d being pressed at the same time before the start and/or after the end of the autonomous traveling of the tractor 1.

In addition, on the operation surface 471 of the remote controller 470, a mark line 473 as a mark for a worker is provided so as to have an X shape as a whole except for the four operation buttons 472a to 472d. With the mark line 473, it is possible to remotely operate the tractor 1 while suppressing misoperation before the start and/or after the end of the autonomous traveling of the tractor 1.

In addition, as illustrated in Fig. 7, four push button-type operation buttons 572a to 572d are arranged on an operation surface 571 of the remote controller 570. The operation button 572a and the operation button 572b are pressed in a case where the tractor 1 is allowed to travel. The operation button 572c is pressed in a case where the tractor 1 is paused. The operation button 572d is pressed in a case where the tractor 1 (engine) is stopped.

In addition, also in the remote controller 570, the four operation buttons 572a to 572d are disposed at the positions of the four vertices of a rectangle. The remote controller 570 is capable of remotely operating the tractor 1 by two (e.g. operation button 572a and operation button 572b) out of the four operation buttons 572a to 572d being pressed at the same time before the start and/or after the end of the autonomous traveling of the tractor 1.

In addition, an X-shaped mark line 573 as a mark for a worker is provided on the operation surface 571 of the remote controller 570. In addition, different colors are applied to four regions 574a to 574d partitioned by the mark line 573 on the operation surface 571 of the remote controller 570. By color-coding the four regions 574a to 574d partitioned by the mark line 573 in this manner, it is possible to remotely operate the tractor 1 while suppressing misoperation before the start and/or after the end of the autonomous traveling of the tractor 1.

It should be noted that the mark line 573 of the remote controller 570 may be provided on the four operation buttons 572a to 572d so as to have an X shape as a whole or may be provided so as to have an X shape as a whole except for the four operation buttons 572a to 572d.

The following work vehicle 1 is realized by the embodiment described above.
(1) The work vehicle 1 including: the traveling vehicle body 2 having traveling and steering devices and capable of traveling in a field; the control device 100 controlling the traveling and steering devices such that the traveling vehicle body 2 autonomously travels along the preset travel path R; and the remote operation device 170 outputting a traveling signal with respect to the traveling vehicle body 2 to the control device 100 so that the traveling vehicle body 2 is remotely operated, in which the remote operation device 170 has at least the four push buttons 172 (172a to 172d) and the traveling vehicle body 2 is remotely operable by two out of the four push buttons 172 being pressed at the same time before start and/or after end of the autonomous traveling of the traveling vehicle body 2, and the control device 100 executes forward and reverse movements of the traveling vehicle body 2 by the traveling devices and right and left steering of the steering device in accordance with the combination of the two push buttons 172 pressed at the same time in the remote operation device 170.

According to the work vehicle 1, the traveling vehicle body 2 is remotely operated by two out of the four operation buttons 172 of the remote operation device 170 being pressed at the same time in a predetermined combination. Accordingly, it is possible to remotely operate the traveling vehicle body 2 while suppressing misoperation before the start and/or after the end of the autonomous traveling of the traveling vehicle body 2. Accordingly, when the traveling vehicle body 2 is moved to a ridge by remote operation before the start and/or after the end of the autonomous traveling of the traveling vehicle body 2, for example, a worker H can board the traveling vehicle body 2 (work vehicle 1) with little field entry, which is convenient, and workability is improved.

(2) The work vehicle 1 according to (1), in which the four push buttons 172 are disposed at positions of four vertices of a rectangle in the remote operation device 170, and the control device 100 executes the forward movement of the traveling vehicle body 2 by the traveling devices when the two push buttons 172 disposed at the positions of the two vertices forming an upper side of the rectangle are pressed at the same time, executes the reverse movement of the traveling vehicle body 2 by the traveling devices when the two push buttons 172 disposed at the positions of the two vertices forming a lower side of the rectangle are pressed at the same time, executes the left steering of the steering device when the two push buttons 172 disposed at the positions of the two vertices forming a left side of the rectangle are pressed at the same time, and executes the right steering of the steering device when the two push buttons 172 disposed at the positions of the two vertices forming a right side of the rectangle are pressed at the same time.

According to the work vehicle 1, the effect of (1) is achieved and, in addition, the four operation buttons 172 on the remote operation device 170 are disposed such that the positions of the two push buttons 172 pressed at the same time and the movement of the traveling vehicle body 2 (e.g. forward movement, reverse movement, left turn, and right turn) by remote operation of the remote operation device 170 match substantially. In other words, the combination of the two push buttons 172 pressed at the same time is a combination of positions where the worker H can easily image the movement of the traveling vehicle body 2, and thus misoperation can be suppressed more reliably.

(3) The work vehicle 1 according to (1) or (2), in which the control device 100 executes the forward and reverse movements of the traveling vehicle body 2 by the traveling devices and the right and left steering of the steering device in accordance with the combination of the two push buttons 172 only while the two push buttons 172 are pressed at the same time.

According to the work vehicle 1, the effect of (1) or (2) is achieved and, in addition, misoperation can be suppressed more reliably since the traveling vehicle body 2 moves only while the two push buttons 172 of the remote operation device 170 are pressed at the same time.

Further effects and modification examples can be easily derived by those skilled in the art. Accordingly, the broader aspects of the invention are not limited to the particular details and representative embodiments expressed and described as above. Accordingly, various changes can be made without departing from the spirit or scope of the general concept of the invention defined by the appended claims and equivalents thereto.

To provide a work vehicle allowing a worker to board the work vehicle with little field entry before the start and/or after the end of the autonomous traveling of a traveling vehicle body. A work vehicle according to an embodiment includes a traveling vehicle body, a control device, and a remote operation device. The traveling vehicle body has traveling and steering devices. The control device controls the traveling and steering devices such that the traveling vehicle body autonomously travels. The remote operation device outputs a traveling signal with respect to the traveling vehicle body to the control device so that the traveling vehicle body is remotely operated. The remote operation device has at least four push buttons. The traveling vehicle body is remotely operable by two out of the four push buttons being pressed at the same time before the start and/or after the end of the autonomous traveling of the traveling vehicle body. The control device executes the forward and reverse movements of the traveling vehicle body and the right and left steering of the steering device in accordance with the combination of the two push buttons pressed at the same time in the remote operation device.

## Claims

1. A work vehicle (1) comprising:
a traveling vehicle body (2) having traveling devices (3 and 4) and a steering device (9) and capable of traveling in a field;
a control device (100) controlling the traveling devices (3 and 4) and the steering device (9) such that the traveling vehicle body (2) autonomously travels along a preset travel path (R); and
a remote operation device (170) outputting a traveling signal with respect to the traveling vehicle body (2) to the control device (100) so that the traveling vehicle body (2) is remotely operated,
**characterized in that**
the remote operation device (170) has at least four push buttons and the traveling vehicle body (2) is remotely operable by two out of the four push buttons (172) being pressed at the same time before start and/or after end of the autonomous traveling of the traveling vehicle body (2), and
the control device (100) executes forward and reverse movements of the traveling vehicle body (2) by the traveling devices (3 and 4) and right and left steering of the steering device (9) in accordance with the combination of the two push buttons (172) pressed at the same time in the remote operation device (170).

2. The work vehicle according to claim 1, wherein
the four push buttons (172) are disposed at positions of four vertices of a rectangle in the remote operation device (170), and
the control device (100)
executes the forward movement of the traveling vehicle body (2) by the traveling devices (3 and 4) when the two push buttons (172a and 172b) disposed at the positions of the two vertices forming an upper side of the rectangle are pressed at the same time,
executes the reverse movement of the traveling vehicle body (2) by the traveling devices (3 and 4) when the two push buttons (172c and 172d) disposed at the positions of the two vertices forming a lower side of the rectangle are pressed at the same time,
executes the left steering of the steering device (9) when the two push buttons (172a and 172d) disposed at the positions of the two vertices forming a left side of the rectangle are pressed at the same time, and
executes the right steering of the steering device (9) when the two push buttons (172b and 172c) disposed at the positions of the two vertices forming a right side of the rectangle are pressed at the same time.

3. The work vehicle according to claim 1 or 2, wherein the control device (100) executes the forward and reverse movements of the traveling vehicle body (2) by the traveling devices (3 and 4) and the right and left steering of the steering device (9) in accordance with the combination of the two push buttons (172) only while the two push buttons (172) are pressed at the same time.

## Patentansprüche

1. Arbeitsfahrzeug (1), mit:
einem Fahr-Fahrzeugkörper (2) mit Fahrvorrichtungen (3 und 4) und einer Lenkvorrichtung (9), der dazu fähig ist, in einem Feld zu fahren;
einer Steuerungsvorrichtung (100), die die Fahrvorrichtungen (3 und 4) und die Lenkvorrichtung (9) derart steuert, dass sich der Fahr-Fahrzeugkörper (2) autonom entlang eines voreingestellten Fahrwegs (R) bewegt; und
einer Fernbedienungsvorrichtung (170), die ein Fahrsignal in Bezug auf den Fahr-Fahrzeugkörper (2) an die Steuerungsvorrichtung (100) ausgibt, so dass der Fahr-Fahrzeugkörper (2) ferngesteuert wird, wobei
**dadurch gekennzeichnet, dass**
die Fernbedienungsvorrichtung (170) mindestens vier Drucktasten aufweist und der Fahr-Fahrzeugkörper (2) fernbedienbar ist, indem zwei der vier Drucktasten (172) vor Beginn und/oder nach Ende der autonomen Fahrt des Fahr-Fahrzeugkörpers (2) gleichzeitig gedrückt werden, und
die Steuerungsvorrichtung (100) Vorwärts- und Rückwärtsbewegungen des Fahr-Fahrzeugkörpers (2) durch die Fahrvorrichtungen (3 und 4) und Rechts- und Linkslenkung der Lenkvorrichtung (9) entsprechend der Kombination der beiden gleichzeitig gedrückten Drucktasten (172) in der Fernbedienungsvorrichtung (170) ausführt.

2. Arbeitsfahrzeug gemäß Anspruch 1, wobei
die vier Drucktasten (172) an Positionen von vier Eckpunkten eines Rechtecks in der Fernbedienungsvorrichtung (170) angeordnet sind, und
die Steuerungsvorrichtung (100)
die Vorwärtsbewegung des Fahr-Fahrzeugkörpers (2) durch die Fahrvorrichtungen (3 und 4) ausführt, wenn die beiden Drucktasten (172a und 172b), die an den Positionen der beiden Scheitelpunkte, die eine Oberseite des Rechtecks bilden, angeordnet sind, gleichzeitig gedrückt werden
die Rückwärtsbewegung des Fahr-Fahrzeugkörpers (2) durch die Fahrvorrichtungen (3 und 4) ausführt, wenn die beiden Drucktasten (172c und 172d), die an den Positionen der beiden eine untere Seite des Rechtecks bildenden Scheitelpunkte angeordnet sind, gleichzeitig gedrückt werden,
die Linkslenkung der Lenkvorrichtung (9) ausführt, wenn die beiden Drucktasten (172a und 172d), die an den Positionen der beiden eine linke Seite des Rechtecks bildenden Scheitelpunkte angeordnet sind, gleichzeitig gedrückt werden, und
die Rechtslenkung der Lenkvorrichtung (9) ausführt, wenn die beiden Drucktasten (172b und 172c), die an den Positionen der beiden Scheitelpunkte, die eine rechte Seite des Rechtecks bilden, angeordnet sind, gleichzeitig gedrückt werden.

3. Arbeitsfahrzeug gemäß Anspruch 1 oder 2, wobei die Steuerungsvorrichtung (100) die Vorwärts- und Rückwärtsbewegungen des Fahr-Fahrzeugkörpers (2) durch die Fahrvorrichtungen (3 und 4) und die Rechts- und Linkslenkung der Lenkvorrichtung (9) entsprechend der Kombination der beiden Drucktasten (172) nur dann ausführt, wenn die beiden Drucktasten (172) gleichzeitig gedrückt werden.

## Revendications

1. Véhicule de travail (1), comprenant :
une carrosserie de véhicule de déplacement (2) ayant des dispositifs de déplacement (3 et 4) et un dispositif de direction (9) et capable de se déplacer dans un champ ;
un dispositif de commande (100) commandant les dispositifs de déplacement (3 et 4) et le dispositif de direction (9) de telle sorte que la carrosserie de véhicule de déplacement (2) se déplace de façon autonome le long d'un chemin de déplacement prédéfini (R) ; et
un dispositif de fonctionnement à distance (170) envoyant en sortie un signal de déplacement, en ce qui concerne la carrosserie de véhicule de déplacement (2), au dispositif de commande (100) pour que la carrosserie de véhicule de déplacement (2) soit mise en fonctionnement à distance, **caractérisé en ce que**
le dispositif de fonctionnement à distance (170) a au moins quatre boutons-poussoirs et la carrosserie de véhicule de déplacement (2) est peut être mise en fonctionnement à distance par deux, parmi les quatre boutons-poussoirs (172), pressés en même temps avant le début et/ou après la fin du déplacement autonome de la carrosserie de véhicule de déplacement (2), et
le dispositif de commande (100) exécute des mouvements en marche avant et en marche arrière de la carrosserie de véhicule de déplacement (2) par l'intermédiaire des dispositifs de déplacement (3 et 4) et une mise en direction vers la droite et vers la gauche du dispositif de direction (9) conformément à la combinaison des deux boutons-poussoirs (172) pressés en même temps dans le dispositif de fonctionnement à distance (170).

2. Véhicule de travail selon la revendication 1, dans lequel
les quatre boutons-poussoirs (172) sont disposés à des positions de quatre sommets d'un rectangle dans le dispositif de fonctionnement à distance (170), et
le dispositif de commande (100)
exécute le mouvement en marche avant de la carrosserie de véhicule de déplacement (2) par l'intermédiaire des dispositifs de déplacement (3 et 4) lorsque les deux boutons-poussoirs (172a et 172b) disposés aux positions des deux sommets formant un côté supérieur du rectangle sont pressés en même temps,
exécute le mouvement en marche arrière de la carrosserie de véhicule de déplacement (2) par l'intermédiaire des dispositifs de déplacement (3 et 4) lorsque les deux boutons-poussoirs (172c et 172d) disposés aux positions des deux sommets formant un côté inférieur du rectangle sont pressés en même temps,
exécute la mise en direction vers la gauche du dispositif de direction (9) lorsque les deux boutons-poussoirs (172a et 172d) disposés aux positions des deux sommets formant un côté gauche du rectangle sont pressés en même temps, et
exécute la mise en direction vers la droite du dispositif de direction (9) lorsque les deux boutons-poussoirs (172b et 172c) disposés aux positions des deux sommets formant un côté droit du rectangle sont pressés en même temps.

3. Véhicule de travail selon la revendication 1 ou 2, dans lequel le dispositif de commande (100) exécute les mouvements en marche avant et en marche arrière de la carrosserie de véhicule de déplacement (2) par l'intermédiaire des dispositifs de déplacement (3 et 4) et la mise en direction vers la droite et vers la gauche du dispositif de direction (9) conformément à la combinaison des deux boutons-poussoirs (172) seulement alors que les deux boutons-poussoirs (172) sont pressés en même temps.
